# EUROPEAN PATENT APPLICATION

(11) **EP 3 674 889 A1**
(43) Date of publication of application: **01.07.2020**
(21) Application number: 19217264.1
(22) Date of filing: 17.12.2019
(51) Int. Cl.: G06F 8/65, G06F 8/658, F25D 17/06, D06F 33/00, H04N 21/40, H05B 6/64

(54) **HOUSEHOLD APPLIANCE AND HOUSEHOLD APPLIANCE FIRMWARE UPGRADE METHOD**

(30) Priority: 26.12.2018 CN 201811596128
(71) Applicant: BSH Hausgeräte GmbH, 81739 München (DE)
(72) Inventor: Yang, Jia, Nanjing, 210046 (CN); Chen, Xiaohui, Nanjing, 210046 (CN)

(57) **Abstract**

A household appliance and a household appliance firmware upgrade method are provided. The household appliance includes: a system master control module and at least one function module. The system master control module includes: a firmware upgrade client, configured to interact with a server and obtain a new version of firmware corresponding to the at least one function module; and a first communications module, configured to implement communication between the firmware upgrade client and the at least one function module. Function modules without an Internet function, can upgrade firmware in time by using the firmware upgrade client, thereby improving working performance of these function modules and optimizing user experience. In addition, the function modules use the firmware upgrade client to obtain a new version of firmware to upgrade the firmware without independently interacting with the server, thereby achieving effects of facilitating management and reducing costs and the complexity.

## Description

### BACKGROUND

### Technical Field

The present invention relates to the field of intelligent household appliance technologies, and in particular, to a household appliance and a household appliance firmware upgrade method.

### Related Art

With the development of Internet technologies, cloud technologies and big data technologies are increasingly mature. Increasing household appliances are using intelligent operating systems, installed with more applications, and used in more application scenarios. To provide users with more convenient use, intelligent household appliances have gradually become a general development trend today.

With household appliances becoming more intelligent, function modules inside the household appliances are increasing. As the function modules increase, efforts in management and maintenance of the function modules in post-sales services increase. Taking firmware upgrade of modules as an example, it is impractical for post-sales service staff to periodically go to users' homes and manually upgrade all function modules inside household appliances. In addition, there are some problems in the existing wireless firmware upgrade technology. For example, not all function modules inside household appliances have an Internet function. As a result, function modules without an Internet function cannot upgrade firmware in a wireless manner. Even though each function module has an Internet function, the interaction between each function module and a cloud server still increases the system complexity and server overheads.

Therefore, a new household appliance firmware upgrade method and a new household appliance are needed to resolve the above problem.

### SUMMARY

Embodiments of the present invention provide a household appliance, including: a system master control module and at least one function module. The system master control module includes: a firmware upgrade client, configured to interact with a server and obtain a new version of firmware corresponding to the at least one function module; and a first communications module, configured to implement communication between the firmware upgrade client and the at least one function module.

Compared with the prior art, an advantage of the embodiments of the present invention is that the firmware upgrade client interacts with the server through the first communications module. On one hand, function modules without an Internet function can upgrade firmware in time by using the firmware upgrade client, thereby improving working performance of these function modules and optimizing user experience. On the other hand, the function modules use the firmware upgrade client to obtain a new version of firmware to upgrade the firmware without independently interacting with the server, thereby achieving effects of facilitating management and reducing costs and the complexity.

Optionally, the firmware upgrade client and the at least one function module use a same set of communications buses for mutual communication. In this way, the quantity of hardware can be reduced and the design complexity of the system master control module can be reduced.

Optionally, the system master control module further includes: a protocol abstraction module, configured to adjust information sent by the system master control module to adapt to a data format corresponding to the at least one function module, or adjust information sent by the at least one function module to adapt to a data format corresponding to the system master control module. In this way, upper software needs to consider only service logic instead of a specific data format, facilitating the development of standardization.

Optionally, the system master control module further includes: a physical interface module, configured to adjust information sent by the system master control module to adapt to a physical interface corresponding to the at least one function module, or adjust information sent by the at least one function module to adapt to a physical interface corresponding to the system master control module. For some system information, an interruption type obtaining frequency helps to reduce system power consumption. In this way, upper software needs to consider only service logic instead of a specific physical interface, facilitating cross-platform transplant and replacement of a bottom physical port.

Optionally, the household appliance further includes a second communications module, configured to support the firmware upgrade client in information interaction with the server through wireless communication, thereby improving the firmware upgrade efficiency.

Optionally, the system master control module further includes: a system configuration module, configured to store configuration information. The configuration information includes firmware version information of the at least one function module and whether the at least one function module has a firmware upgrade capability. In this way, the firmware upgrade client can obtain configuration information of function modules, so as to determine whether the function modules have a firmware upgrade capability and improve the firmware upgrade efficiency.

Optionally, the firmware upgrade client includes: a determining unit, configured to determine a function module with a firmware upgrade capability; a request unit, configured to send a download request for a new version of firmware to the server; a receiving unit, configured to receive the new version of firmware sent by the server; and a sending unit, sending the new version of firmware to the function module so as to enable the function module to upgrade firmware.

Optionally, the determining unit includes: a first determining subunit, configured to determine the function module with a firmware upgrade capability; a receiving subunit, configured to receive a push notification about new versions sent by the server; a judging subunit, configured to determine whether the push notification about the new versions includes information about a new version of firmware of the function module with a firmware upgrade capability; and a demand determining subunit, configured to determine that the corresponding function module needs to upgrade the firmware if the push notification about the new versions includes information about a new version of firmware of the function module with a firmware upgrade capability. In this way, a new version of firmware can be obtained in time, thereby improving user experience.

Optionally, the determining unit includes: a second determining subunit, configured to determine the function module with a firmware upgrade capability; a request subunit, configured to send a firmware version information request to the server; an obtaining subunit, configured to obtain firmware version information; and a judging subunit, configured to determine, according to the firmware version information, whether the function module with a firmware upgrade capability needs to upgrade the firmware. In this way, a push notification irrelevant to the current household appliance does not need to be received, so as to reduce system signaling overheads.

The embodiments of the present invention further provide a household appliance firmware upgrade method, including: determining a function module needing to upgrade firmware; sending a download request for a new version of the firmware to a server; receiving the new version of the firmware sent by the server; and sending the new version of the firmware to the function module so as to enable the function module to upgrade the firmware.

Compared with the prior art, an advantage of the embodiments of the present invention is: on one hand, function modules without an Internet function can upgrade firmware in time by using the firmware upgrade client, thereby improving working performance of these function modules and optimizing user experience; on the other hand, the function modules use the firmware upgrade client to obtain a new version of firmware to upgrade the firmware without independently interacting with the server, thereby achieving effects of facilitating management and reducing costs and the complexity.

Optionally, the determining a function module needing to upgrade firmware includes: determining the function module with a firmware upgrade capability; receiving a push notification about new versions sent by the server; determining whether the push notification about the new versions includes information about a new version of the firmware of the function module with a firmware upgrade capability; and determining that the corresponding function module needs to upgrade the firmware if the push notification about the new versions includes information about a new version of firmware of the function module with a firmware upgrade capability. In this way, a new version of firmware can be obtained in time, thereby improving user experience.

Optionally, the determining a function module needing to upgrade firmware includes: determining the function module with a firmware upgrade capability; sending a firmware version information request to the server; obtaining firmware version information; and determining, according to the firmware version information, whether the function module with a firmware upgrade capability needs to upgrade the firmware. In this way, a push notification irrelevant to the current household appliance does not need to be received, so as to reduce system signaling overheads.

Optionally, after the sending the new version of the firmware to the function module, the method further includes: adjusting the new version of the firmware to adapt to a physical interface and a data format corresponding to the function module. Therefore, upper software needs to consider only service logic instead of a specific physical interface or data format, facilitating the development of standardization and further extension.

Optionally, before the sending the new version of the firmware to the function module, the method further includes establishing a communication connection to the function module. Through the communication connection, function modules can obtain a new version of firmware to upgrade the firmware without interacting with the server, thereby reducing the system complexity.

Optionally, the establishing a communication connection to the function module includes: sending a communication connection establishment request to the function module; and receiving confirmation information sent by the function module.

Optionally, after the sending a communication connection establishment request to the function module, the method further includes: adjusting the communication connection establishment request to adapt to a physical interface and a data format corresponding to the function module. Therefore, upper software needs to consider only service logic instead of a specific physical interface or data format, facilitating the development of standardization and further extension.

Optionally, before the receiving confirmation information sent by the function module, the method further includes: adjusting the confirmation information to adapt to a physical interface and a data format corresponding to the system master control module. Therefore, upper software needs to consider only service logic instead of a specific physical interface or data format, facilitating the development of standardization and further extension.

Optionally, the household appliance implements information interaction with the server through wireless communication, so as to improve the firmware upgrade efficiency and optimize user experience.

### BRIEF DESCRIPTION OF THE DRAWINGS

FIG. 1 is a schematic structural diagram of a household appliance according to an embodiment of the present invention;
FIG. 2 is a schematic structural diagram of a firmware upgrade client according to an embodiment of the present invention;
FIG. 3 is a schematic structural diagram of a determining unit according to an embodiment of the present invention;
FIG. 4 is a schematic structural diagram of a determining unit according to an embodiment of the present invention;
FIG. 5 is a schematic flowchart of a household appliance firmware upgrade method according to an embodiment of the present invention;
FIG. 6 is a schematic flowchart of S11 in FIG. 5; and
FIG. 7 is a schematic flowchart of S11 in FIG. 5.

### DETAILED DESCRIPTION

A household appliance provided in embodiments of the present invention may be an intelligent household appliance with a communications function, such as a washing machine, a refrigerator, an air conditioner, a microwave oven, or a television set.

In this embodiment, an intelligent refrigerator is used as an example of the household appliance for description. Currently, all intelligent refrigerators use an intelligent operating system and are provided with a wireless communication capability to connect to a home router. Therefore, for an intelligent refrigerator, firmware upgrade of a function module can be implemented through wireless communication, for example, through firmware over-the-air (FOTA).

Compared with the existing firmware upgrade method, in the embodiments of the present invention, firmware upgrade of a function module can be implemented as long as the system master control module 111 has an Internet function.

In some embodiments, the intelligent refrigerator includes at least one function module. The function module (which may also be referred to as a working module) may be configured to control the household appliance to operate in a corresponding operating status. Taking the refrigerator as an example, the function module may include: a compressor, a condenser, a refrigerator door, a human-machine interaction interface, an application, and the like. Firmware is a drive program stored inside these function modules. Only through the firmware can the function modules perform specific operating actions and implement intelligent functions. Through firmware upgrade, loopholes and compatibility problems in existing firmware can be resolved, and on the other hand, performance of the existing firmware can be improved.

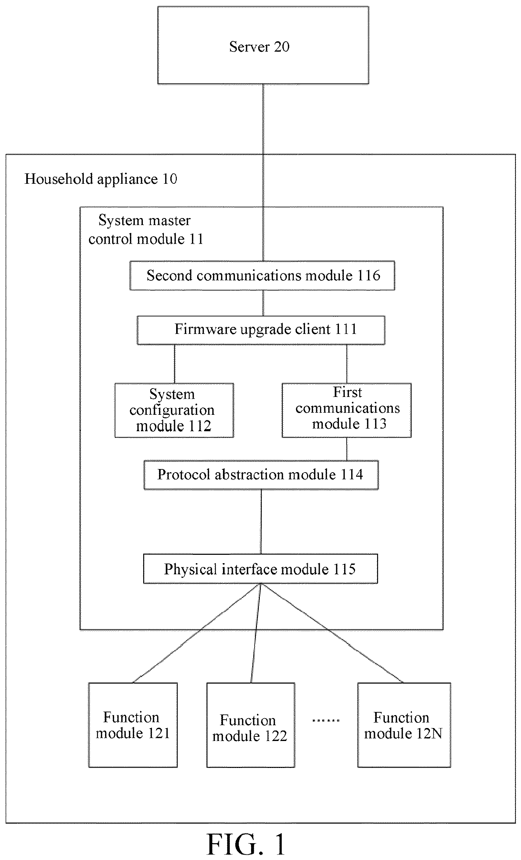

Referring to FIG. 1, FIG. 1 is a schematic structural diagram of a household appliance according to an embodiment of the present invention. The household appliance 10 includes: a system master control module 11 and at least one function module (121-12N).

In some embodiments, the system master control module 11 includes: a firmware upgrade client 111 and a first communications module 113. The firmware upgrade client 111 is configured to interact with a server, and download and verify a version of firmware specific to the at least one function module (121-12N). The first communications module 113 is configured to implement communication between the firmware upgrade client 111 and the at least one function module (121-12N).

In some embodiments, the firmware upgrade client 111 and the at least one function module (121-12N) use a same set of communications buses for mutual communication.

In some embodiments, considering extensibility and a technical limitation of the household appliance 10, if some of the function modules (121-12N) do not support the existing communications buses, a protocol abstraction module 114 and a physical interface module 115 in the system master control module 11 can be used.

The protocol abstraction module 114 is configured to adjust information sent by the system master control module 11 to adapt to a data format corresponding to the at least one function module (121-12N), or adjust information sent by the at least one function module (121-12N) to adapt to a data format corresponding to the system master control module 11.

The physical interface module 115 is configured to adjust information sent by the system master control module 11 to adapt to a physical interface corresponding to the at least one function module (121-12N), or adjust information sent by the at least one function module (121-12N) to adapt to a physical interface corresponding to the system master control module 11.

In some embodiments, the physical interface may include a universal asynchronous receiver/transmitter (UART) serial port, an RS85 interface, an Ethernet interface, a universal serial bus (USB), or a Bluetooth. The data format is a data format corresponding to the physical interface.

In some embodiments, the system master control module 11 further includes a system configuration module 112, configured to store configuration information of the at least one function module (121-12N). The configuration information includes firmware version information of the at least one function module (121-12N) and whether the at least one function module (121-12N) has a firmware upgrade capability.

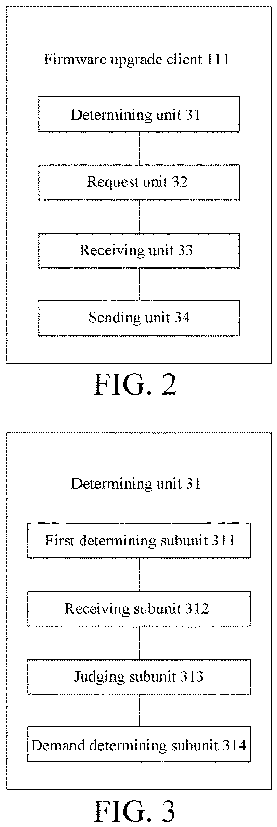

Referring to FIG. 2, FIG. 2 is a schematic structural diagram of a firmware upgrade client according to an embodiment of the present invention.

In some embodiments, the firmware upgrade client 111 includes: a determining unit 31, configured to determine a function module with a firmware upgrade capability; a request unit 32, configured to send a download request for a new version of firmware to a server 20; a receiving unit 33, configured to receive the new version of firmware sent by the server 20; and a sending unit 34, configured to send the new version of firmware to the function module so as to enable the function module to upgrade firmware.

Referring to FIG. 3, FIG. 3 is a schematic structural diagram of a determining unit according to an embodiment of the present invention.

In some embodiments, the determining unit 31 includes: a first determining subunit 311, configured to determine the function module with a firmware upgrade capability; a receiving subunit 312, configured to receive a push notification about new versions sent by the server; a judging subunit 313, configured to determine whether the push notification about the new versions includes information about a new version of firmware of the function module with a firmware upgrade capability; and a demand determining subunit 314, configured to determine that the corresponding function module needs to upgrade the firmware if the push notification about the new versions includes information about a new version of firmware of the function module with a firmware upgrade capability. In this way, a new version of firmware can be obtained in time, thereby improving user experience.

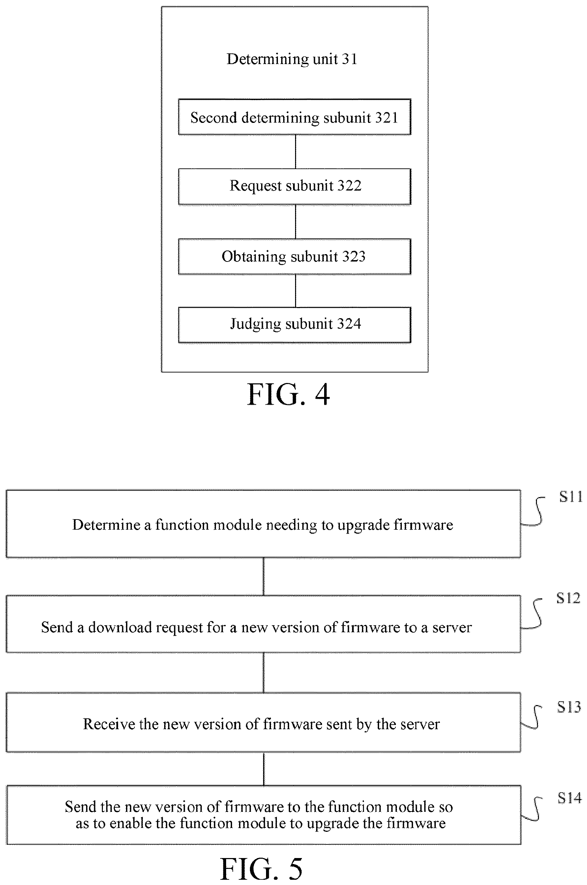

Referring to FIG. 4, FIG. 4 is a schematic structural diagram of a determining unit according to an embodiment of the present invention.

In some embodiments, the determining unit 31 includes: a second determining subunit 321, configured to determine the function module with a firmware upgrade capability; a request subunit 322, configured to send a firmware version information request to the server; an obtaining subunit 323, configured to obtain firmware version information; and a judging subunit 324, configured to determine, according to the firmware version information, whether the function module needs to upgrade the firmware. In this way, a push notification irrelevant to the current household appliance does not need to be received, so as to reduce system signaling overheads.

Referring to FIG. 5, FIG. 5 is a schematic flowchart of a household appliance firmware upgrade method according to an embodiment of the present invention.

In S11, a function module needing to upgrade firmware is determined.

In specific implementation, the firmware upgrade client 111 first determines which function modules in the household appliance 10 need to upgrade functions. When there is a new version of firmware and the function modules have a firmware upgrade capability, the system master control module 11 may upgrade the function modules. Specifically, the system master control module 11 may determine the function modules needing to upgrade firmware in the following two manners.

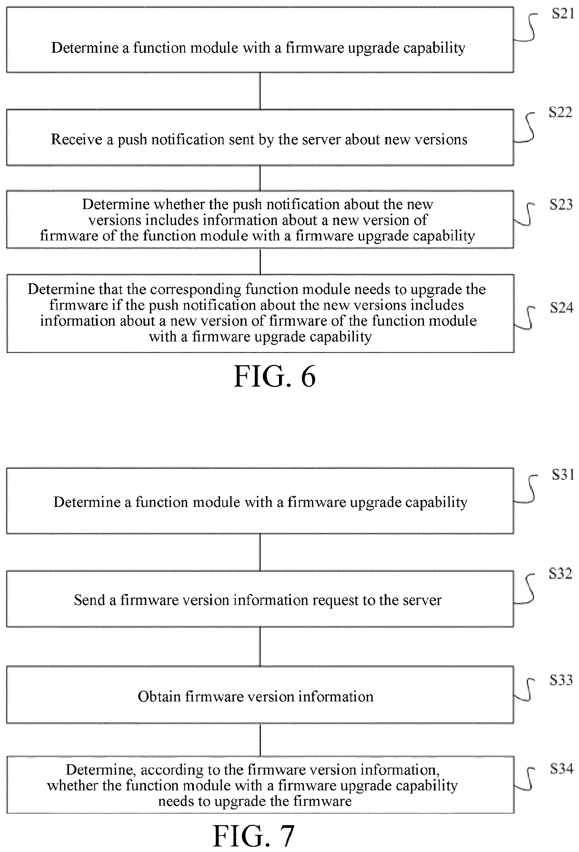

Referring to FIG. 6, FIG. 6 is a schematic flowchart of S11 in FIG. 5.

In S21, a function module with a firmware upgrade capability is determined.

In some embodiments, the firmware upgrade client 111 determines which function modules have a firmware upgrade capability. Specifically, if the household appliance 10 uses the FOTA technology, the firmware upgrade client 111 needs to determine which function modules can support an FOTA function.

In some embodiments, the firmware upgrade client 111 may obtain configuration information of the at least one function module (121-12N) from the system configuration module 112. The configuration information includes firmware version information of the at least one function module (121-12N) and whether the at least one function module (121-12N) has a firmware upgrade capability. Specifically, the firmware upgrade client 111 sends an inquiry instruction to the system configuration module 112. The system configuration module 112 sends the configuration information of the at least one function module (121-12N) to the firmware upgrade client 111 in response to the inquiry instruction. In this way, the firmware upgrade client 111 can determine which function modules in the at least one function module (121-12N) have a firmware upgrade capability.

In S22, a push notification about new versions sent by the server is received.

In some embodiments, the firmware upgrade client 111 may receive a push notification about new versions sent by the server 20. When new versions of firmware are available in the server 20, the server 20 sends a push notification about the new versions to the household appliance 10.

In S23, it is determined whether the push notification about the new versions includes information about a new version of firmware of the function module with a firmware upgrade capability.

Much firmware is stored in the server 20. The household appliance 10, that is, the intelligent refrigerator, does not need to download firmware of other household appliances. Meanwhile, for function modules without an FOTA function, the intelligent refrigerator does not need to download corresponding firmware. Therefore, after receiving the push notification about the new versions, the firmware upgrade client 111 does not immediately send a download request to the server 20. Instead, the firmware upgrade client 111 first determines whether the push notification about the new versions includes information about new versions of firmware of the function module with a firmware upgrade capability. Specifically, the firmware upgrade client 111 determines whether corresponding firmware of the new versions is applicable to the function module with a firmware upgrade capability in the intelligent refrigerator.

In S24, it is determined that the corresponding function module needs to upgrade the firmware if the push notification about the new versions includes information about a new version of firmware of the function module with a firmware upgrade capability.

If the firmware upgrade client 111 determines that the push notification about the new versions includes information about new versions of firmware of the function module with a firmware upgrade capability, it is determined that the corresponding function module needs to upgrade the firmware. Still, taking the intelligent refrigerator as an example, in some embodiments, a user interaction interface of the intelligent refrigerator has a firmware upgrade capability while a refrigerating machine does not have a firmware upgrade capability. If a push notification about new versions includes information about new versions of firmware of the user interaction interface and the refrigerating machine, the firmware upgrade client 111 determines that the user interaction interface needs to upgrade firmware.

In this embodiment, the firmware upgrade client 111 determines, by receiving the push notification about the new versions, the function modules needing to upgrade firmware. In this way, a new version of firmware can be obtained in time, thereby improving user experience.

In some embodiments, the function modules needing to upgrade firmware may also be determined by actively sending an inquiry to the server 20.

Referring to FIG. 7, FIG. 7 is a schematic flowchart of S11 in FIG. 5.

In S31, a function module with a firmware upgrade capability is determined.

For details of S31, reference may be made to relevant descriptions in S21, which are not described herein again.

In S32, a firmware version information request is sent to the server.

In some embodiments, the firmware upgrade client 111 sends a firmware version information request to the server 20 through the second communications module 116. The firmware version information request corresponds to the function modules with a firmware upgrade capability in the household appliance 10.

Still, taking the intelligent refrigerator as an example, in some embodiments, if a camera and a user interaction interface of the intelligent refrigerator have a firmware upgrade capability, the firmware upgrade client 111 sends a firmware version information request to the server 20 to obtain firmware version information of the user interaction interface and the camera.

In S33, the firmware version information is obtained.

In some embodiments, the firmware upgrade client 111 receives the firmware version information from the server 20 through the second communications module 116. The firmware version information corresponds to the firmware version information request. For example, if the firmware version information request includes a request about the user interaction interface and the camera, the firmware upgrade client 111 may obtain the firmware version information about the user interaction interface and the camera from the server 20.

In S34, it is determined, according to the firmware version information, whether the function module with a firmware upgrade capability needs to upgrade the firmware.

In some embodiments, after obtaining the firmware version information, the firmware upgrade client 111 determines whether the function module with a firmware upgrade capability needs to upgrade firmware. If the current version of firmware used by the function module is the same as the version in the firmware version information (the version of firmware in the server 20), the firmware does not need to be upgraded.

In this embodiment, after determining whether the function modules have a firmware upgrade capability, the firmware upgrade client 111 sends a targeted firmware version information request, so that a push notification irrelevant to the current household appliance does not need to be received, so as to reduce system signaling overheads.

Referring to FIG. 2 again, in S12, a download request for a new version of firmware is sent to a server.

In some embodiments, after determining the function modules needing to upgrade firmware, the firmware upgrade client 111 sends a download request for a new version of firmware to the server 20. For example, if the camera in the intelligent refrigerator needs to upgrade firmware, the firmware upgrade client 111 sends, to the server 20, a download request for a new version of firmware corresponding to the camera, so as to obtain the new version of firmware for the camera.

In S13, the new version of firmware sent by the server is received.

After sending the download request for a new version of firmware to the server 20, the firmware upgrade client 111 receives the new version of firmware sent by the server 20. In some embodiments, the new version of firmware received by the firmware upgrade client 111 is a firmware upgrade package.

In S14, the new version of firmware is sent to the function module so as to enable the function module to upgrade the firmware.

In some embodiments, before the firmware upgrade client 111 sending the new version of firmware to the function module, the method further includes that the firmware upgrade client 111 establishing a communication connection to the function module through the first communications module 113. Specifically, the firmware upgrade client 111 needs only to establish a communication connection to the function module needing to upgrade firmware.

The establishing a communication connection to the function module includes: sending a communication connection establishment request to the function module; and receiving confirmation information sent by the function module.

Specifically, the firmware upgrade client 111 sends a communication request to the first communications module 113. After receiving the communication request, the first communications module 113 sends a communication connection establishment request to the function module. The function module prepares for connection (for example, the function module suspends a running task currently). The function module sends confirmation information to the first communications module 113. The first communications module 113 sends confirmation information to the firmware upgrade client 111. In this way, communication connection is established between the firmware upgrade client 111 in the system master control module 11 and the function module.

In some embodiments, the firmware upgrade client 111 and the at least one function module use a same set of communications buses for mutual communication.

In some embodiments, considering extensibility and a technical limitation, if some peripheral modules do not support the existing communications buses, a protocol abstraction module 114 and a physical interface module 115 can be added for conversion of a physical interface and a data format.

Specifically, after the firmware upgrade client 111 sending the new version of firmware to the function module, the method further includes: adjusting the new version of firmware to adapt to a physical interface and a data format corresponding to the function module.

In some embodiments, after the first communications module 113 sending a communication connection establishment request to the function module, the method further includes: adjusting the communication connection establishment request to adapt to a physical interface and a data format corresponding to the function module.

In some embodiments, before the first communications module 113 receiving confirmation information sent by the function module, the method further includes: adjusting the confirmation information to adapt to a physical interface and a data format corresponding to the system master control module.

With the protocol abstraction module 114 and the physical interface module 115 being disposed, upper software needs to consider only service logic instead of a specific physical interface or data format, facilitating cross-platform transplant and replacement of a bottom physical port.

In some embodiments, after receiving the new version of firmware, the function module upgrades the firmware.

A person of ordinary skill in the art may understand that all or some of the steps of the methods in the embodiments may be implemented by a program instructing relevant hardware. The program may be stored in a computer readable storage medium. The storage medium may include: a ROM, a RAM, a disk, an optical disc, or the like.

Although the present invention is disclosed as above, the present invention is not limited thereto. Any person skilled in the art can make various variations or modifications without departing from the spirit and scope of the present invention. Therefore, the protection scope of the present invention shall be subject to the appended claims.

## Claims

1. A household appliance (10), comprising: a system master control module (11) and at least one function module (121-12N), **characterized in that** the system master control module (11) comprises:
a firmware upgrade client (111), configured to interact with a server (20) and obtain a new version of firmware corresponding to the at least one function module (121-12N); and
a first communications module, configured to implement communication between the firmware upgrade client (111) and the at least one function module (121-12N).

2. The household appliance (10) according to claim 1, **characterized in that** the firmware upgrade client (111) and the at least one function module (121-12N) use a same set of communications buses for mutual communication.

3. The household appliance (10) according to claims 1 or 2, **characterized in that** the system master control module (11) further comprises: a protocol abstraction module (114), configured to adjust information sent by the system master control module (111) to adapt to a data format corresponding to the at least one function module (121-12N), or adjust information sent by the at least one function module (121-12N) to adapt to a data format corresponding to the system master control module (11).

4. The household appliance (10) according to any of the preceding claims, **characterized in that** the system master control module (111) further comprises: a physical interface module (115), configured to adjust information sent by the system master control module (111) to adapt to a physical interface corresponding to the at least one function module (121-12N), or adjust information sent by the at least one function module (121-12N) to adapt to a physical interface corresponding to the system master control module (111).

5. The household appliance (10) according to any of the preceding claims, **characterized by** further comprising a second communications module (116), configured to support the firmware upgrade client (111) in information interaction with the server (20) through wireless communication.

6. The household appliance (10) according to any of the preceding claims, **characterized in that** the system master control module (111) further comprises: a system configuration module (112), configured to store configuration information, wherein the configuration information comprises firmware version information of the at least one function module (121-12N) and whether the at least one function module (121-12N) has a firmware upgrade capability.

7. The household appliance (10) according to any of the preceding claims, **characterized in that** the firmware upgrade client (111) comprises:
a determining unit (31), configured to determine a function module with a firmware upgrade capability;
a request unit (32), configured to send a download request for a new version of firmware to the server (20);
a receiving unit (33), configured to receive the new version of firmware sent by the server (20); and
a sending unit (34), configured to send the new version of firmware to the function module with a firmware upgrade capability so as to enable the function module with a firmware upgrade capability to upgrade firmware.

8. The household appliance (10) according to any of the preceding claims, **characterized in that** the determining unit (31) comprises:
a first determining subunit (311), configured to determine the function module with a firmware upgrade capability;
a receiving subunit (312), configured to receive a push notification about new versions sent by the server (20);
a judging subunit (313), configured to determine whether the push notification about the new versions comprises information about a new version of firmware of the function module with a firmware upgrade capability; and
a demand determining subunit (314), configured to determine that the corresponding function module needs to upgrade the firmware if the push notification about the new versions comprises information about a new version of firmware of the function module with a firmware upgrade capability.

9. The household appliance (10) according to any of the preceding claims, **characterized in that** the determining unit (31) comprises:
a second determining subunit (321), configured to determine the function module with a firmware upgrade capability;
a request subunit (322), configured to send a firmware version information request to the server (20);
an obtaining subunit (323), configured to obtain firmware version information; and
a judging subunit (324), configured to determine, according to the firmware version information, whether the function module with a firmware upgrade capability needs to upgrade the firmware.

10. A household appliance firmware upgrade method, **characterized by** comprising:
determining a function module needing to upgrade firmware;
sending a download request for a new version of the firmware to a server;
receiving the new version of the firmware sent by the server; and
sending the new version of the firmware to the function module so as to enable the function module to upgrade the firmware.

11. The household appliance firmware upgrade method according to claim 10, **characterized in that** the determining a function module needing to upgrade firmware comprises:
determining the function module with a firmware upgrade capability;
receiving a push notification about new versions sent by the server;
determining whether the push notification about the new versions comprises information about a new version of the firmware of the function module with a firmware upgrade capability; and
determining that the corresponding function module needs to upgrade the firmware if the push notification about the new versions comprises information about a new version of firmware of the function module with a firmware upgrade capability.

12. The household appliance firmware upgrade method according to claims 10 or 11, **characterized in that** the determining a function module needing to upgrade firmware comprises:
determining the function module with a firmware upgrade capability;
sending a firmware version information request to the server;
obtaining firmware version information; and
determining, according to the firmware version information, whether the function module with a firmware upgrade capability needs to upgrade the firmware.

13. The household appliance firmware upgrade method according to any of the preceding claims 10 to 12, **characterized in that** after the sending the new version of the firmware to the function module, the method further comprises: adjusting the new version of the firmware to adapt to a physical interface and a data format corresponding to the function module.

14. The household appliance firmware upgrade method according to any of the preceding claims 10 to 13, **characterized in that** before the sending the new version of the firmware to the function module, the method further comprises: establishing a communication connection to the function module.

15. The household appliance firmware upgrade method according to any of the preceding claims 10 to 14, **characterized in that** the establishing a communication connection to the function module comprises:
sending a communication connection establishment request to the function module; and
receiving confirmation information sent by the function module.

16. The household appliance firmware upgrade method according to any of the preceding claims 10 to 15, **characterized in that** after the sending a communication connection establishment request to the function module, the method further comprises: adjusting the communication connection establishment request to adapt to a physical interface and a data format corresponding to the function module.

17. The household appliance firmware upgrade method according to any of the preceding claims 10 to 16, **characterized in that** before the receiving confirmation information sent by the function module, the method further comprises: adjusting the confirmation information to adapt to a physical interface and a data format corresponding to a system master control module.

18. The household appliance firmware upgrade method according to claim 10, **characterized in that** the household appliance implements information interaction with the server through wireless communication.
